(19)

**Europäisches Patentamt**
**European Patent Office**
**Office européen des brevets**

(11) **EP 4 775 042 A1**

(12) **EUROPEAN PATENT APPLICATION**

(43) Date of publication:
**15.07.2026  Bulletin 2026/29**

(21) Application number: **25150743.0**

(22) Date of filing: **08.01.2025**

(51) International Patent Classification (IPC):
***A23C 19/14*** *(2006.01)*

(52) Cooperative Patent Classification (CPC):
**A23C 19/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **FrieslandCampina Nederland B.V.**
**3818 LE Amersfoort (NL)**

(72) Inventors:
• **HUPPERTZ, Thom**
  **6708 WH Wageningen (NL)**
• **MUIJLWIJK, Kelly**
  **6708 WH Wageningen (NL)**

(74) Representative: **FrieslandCampina IP Department**
  **Bronland 20**
  **6708 WH Wageningen (NL)**

(54) **PROCESS FOR INCREASING THE MOISTURE CONTENT OF SEMI-HARD CHEESE**

(57) The invention relates to a process for increasing the moisture content of a semi-hard cheese comprising the steps of

(a) providing a semi-hard cheese;

(b) comminuting the semi-hard cheese;

(c) wetting the comminuted semi-hard cheese obtained with a liquid medium comprising water for at least 10 seconds; and

(d) isolating the wetted comminuted semi-hard cheese resulting from step (c) from the remaining liquid medium to obtain the comminuted semi-hard cheese having an increased moisture content,

wherein the liquid medium has a temperature of at least 0 °C and at most 20 °C and wherein the moisture content of the semi-hard cheese increases to such extent that the weight of the comminuted semi-hard cheese that is subjected to step (c) has increased with at least 7% after isolation step (d).

**Description**

FIELD OF THE INVENTION

The invention relates to the field of cheesemaking. In particular, it relates to a process for increasing the moisture content of semi-hard cheese.

BACKGROUND TO THE INVENTION

Comminuted cheese, such as for example grated cheese or shredded cheese, is widely used in the food industry and in dishes, particularly oven dishes that require melted cheese. A well-known example is the use on pizzas. The present invention relates to cheese of the semi-hard type, more specifically to a process for increasing the moisture content of semi-hard cheese, which involves a comminuting step and a wetting step, thus eventually resulting in a comminuted semi-hard cheese having an increased moisture content, which comminuted cheese is suitable for food applications.

The expression "comminuting" or "comminuted" as used herein refers to any treatment wherein the semi-hard cheese is processed into small cheese particles, such as by e.g. slicing, cutting, grating, shredding or dicing semi-hard cheese.

The expression "semi-hard cheese" is a commonly used term to refer to cheese types having a firm yet pliable texture, which fall between soft and hard cheeses. They typically have a moisture content in the order of 40-45% by weight (based on total weight of cheese), a fat content up to 50% by weight on dry matter, and a smooth texture making them particularly suitable for slicing or grating. Furthermore, semi-hard cheeses can be allowed to age for several months, so that they can develop a pronounced flavour without becoming too hard or crumbly and the flavour profile can range from mild to sharp. They have a wide variety of culinary uses being suitable for slicing, grating, melting and cooking. Typical examples of semi-hard cheeses are Gouda cheese, Edam cheese, Swiss type cheese (e.g. Emmentaler cheese), Cheddar cheese, Gruyère cheese and Provolone cheese.

Semi-hard cheeses prepared for comminuting, and specifically for grating, typically are block-shaped foil-ripened cheeses. The preparation of such cheeses is well-known and typically involves packaging the cheese block immediately after brining in a foil and subsequently allowing the cheese to ripen inside the foil at a temperature which is usually between 4 and 20 °C for a period of a few weeks (typically at least 4 weeks and no more than 3 months). A starter culture is typically added to the cheese milk from which the curd is made to induce the ripening inside the foil. The foil used to wrap around or pack the freshly brined cheese block typically is a water- and oxygen-impermeable multi-layer foil. Since the cheese is normally packed in substantially rectangular blocks, the packed cheese blocks can be easily stacked and stored for ripening. The packed blocks are usually transported and subsequently used, after removing the foil, for further processing, such as melting, grating or slicing. Such processed cheese may then be repacked for onward sale and end use. A main advantage of foil-ripened cheese products is that they can be conveniently sliced or cut with much less product loss while no cheese maintenance is needed as is the case with traditionally ripened cheese which, for example, need to be regularly turned and provided with a coating layer after each turn.

Foil-ripened semi-hard cheese is also sometimes referred to as "rindless cheese" as they ripen inside the foil and hence do not develop the typical rind that nature-ripened cheeses have at their outer surface. Such outer surface of a nature-ripened cheese is dryer and hence harder than the core of the cheese, because it is exposed to air during the ripening process and hence moisture evaporates from the outer surface layer during ripening, thus forming the harder and dryer rind. Although a foil-ripened cheese does not have a rind as do nature-ripened cheeses, its outer surface layer is still harder than its core because of the brining. Brining typically takes place by placing the cheese block in a brine bath for some time to allow salt to be absorbed by the cheese. This salt will initially be absorbed into the outer layer of the cheese and subsequently slowly migrate towards the core parts of the cheese. However, salt levels in the outer layer will always remain higher, thus causing this outer layer to be harder than the core of the cheese block.

As indicated above, nature-ripened cheeses are exposed to air during ripening. In a conventional nature ripening method of a semi-hard cheese, after brining, the young cheese is ripened on (wooden) shelves in temperature- and humidity-controlled rooms, typically at about 13 to 18 °C at a relative humidity of 70 to 80% to an age of at least four weeks for a young cheese and a year or more for an old cheese. During the ripening process the cheese is regularly turned, so that the upper and bottom surface are alternately exposed to air while a coating material is applied to protect the rind. Such coating material generally is a water-permeable polymeric material, such as polyvinylacetate, polysaccharides or polyethylene acetate. During ripening the cheese also loses moisture at its outer surface by water evaporation through its coating, thus causing the formation of a hard rind, usually a dry and dark colored zone having a chewy structure and being up to 7-8 mm thick, sometimes even more in case of an old cheese.

The texture and taste of the rind of a semi-hard cheese, both of foil-ripened semi-hard cheeses and of nature-ripened semi-hard cheeses, accordingly are less attractive than the inner part of the cheese: such rind is harder, more chewy and drier. Particularly when the rind becomes too hard, it could lead to different sensory profiles in a single comminuted cheese product that is obtained when comminuting (e.g. by shredding, grating, chopping or cutting) a complete foil-ripened semi-hard cheese or a nature-ripened semi-hard cheese. The present invention aims to provide a method that mitigates this difference in sensory profiles in a single comminuted cheese product and could be used to increase quality of the rind in case this rind would be particularly hard and dry, thus making it less attractive or in some cases even unsuitable for consumption. Furthermore, when removing the hard rind from a semi-hard cheese, foil- or nature-ripened, in order to retain the softer and more tasteful part of the cheese for further processing and use, it would be beneficial that the rind removed could still be used to produce a tasteful cheese product with good textural and melting properties, thereby improving the valorisation of the original semi-hard cheese, particularly when the rind for some reason is unusually dry and hard. The present invention thus aims to improve the valorisation of semi-hard cheese.

SUMMARY OF THE INVENTION

It was found that the moisture content of a cheese of the semi-hard type can be increased, and hence the texture of such comminuted semi-hard cheese can be improved, by first comminuting the semi-hard cheese and then contacting the resulting comminuted semi-hard cheese with a liquid medium comprising water under specific conditions.

DETAILED DESCRIPTION

Accordingly, the invention relates to a process for increasing the moisture content of a semi-hard cheese comprising the steps of

   (a) providing a semi-hard cheese;
   (b) comminuting the semi-hard cheese;
   (c) wetting the comminuted semi-hard cheese obtained with a liquid medium comprising water for at least 10 seconds; and
   (d) isolating the wetted comminuted semi-hard cheese resulting from step (c) from the remaining liquid medium to obtain the comminuted semi-hard cheese having an increased moisture content,

wherein the liquid medium has a temperature of at least 0 °C and at most 20 °C, preferably at most 15 °C, and wherein the moisture content of the semi-hard cheese increases to such extent that the weight of the comminuted semi-hard cheese that is subjected to step (c) has increased with at least 7% after isolation step (d).

In step (a) the semi-hard cheese is provided. As mentioned above typical examples of semi-hard cheeses are Gouda cheese, Edam cheese, Swiss type cheese (e.g. Emmentaler cheese), Cheddar cheese, Gruyère cheese and a Provolone cheese. All these cheese types could be used in the process of the present invention, but Gouda cheese or Edam cheese are preferred.

The preparation of semi-hard cheeses is well known. In general, most preparation methods include the steps of providing a cheese milk, inoculating the cheese milk with an acid-producing microorganism, and forming a coagulum. The coagulum is cut to provide curd and whey, whereupon the curd is separated from the whey and subsequently, the whey is drained from the curd. The curd is pressed and then packed into a suitable form to provide a cohesive mass which, upon some ripening, becomes a semi-hard cheese. Variations in one or more of the above steps for producing a semi-hard cheese result in production of the many varieties of such cheese. For example, in the case of a semi-hard type of cheese like Gouda cheese, the curd is pressed in a cheese mould and then subjected to a brining treatment, typically by transferring the pressed curd to a brine bath. The cheeses are then immersed in the brine bath for a certain period of time, typically a few days, and, after removal from the brine bath and a washing treatment, are subsequently transferred to a climate-controlled warehouse for further ripening in case of natural ripening or packed in a foil for foil-ripening as described above. During the ripening of the cheese the organoleptic quality of the cheese is developed.

As indicated above the outer layer or rind of a semi-hard cheese usually is somewhat harder and dryer and therefore its taste and texture can be of lower quality than the center part of the cheese. The process of the present invention can, accordingly, not only be applied to a complete semi-hard cheese, but also to the rind only, thus requiring this rind to be cut from the cheese first before being subjected to step (b). In this letter embodiment a more pronounced effect on texture and taste of the cheese can be attained. Maximum effect is attained when applied to a rind which is particularly hard and dry and thus unattractive for consumption. The process of the present invention may, accordingly, comprise an additional step between steps (a) and (b):

   (a') cutting an outer layer from the semi-hard cheese obtained in step (a), this outer layer having a thickness of at most 5 cm, preferably at most 3 cm, and using this outer layer as the semi-hard cheese to be subjected to comminuting step (b).

In comminuting step (b) the semi-hard cheese provided in step (a) is processed into smaller particles. In a preferred embodiment step (b) comprises shredding or grating the mozzarella cheese or cutting the mozzarella cheese into particles having a volume below 10 cm$^3$, preferably below 5 cm$^3$. Such particles could have the shape of a cube, cuboid, cylinder or any other desired shape. A suitable comminuting method comprises grating the semi-hard cheese with a grating disc or plate having openings of 8 mm or less, preferably 6 mm or less. The size of the opening refers to the diameter in case of a circular opening or the diagonal in case of a square opening. Very good results can be obtained when using a grating disc or plate having circular openings with a diameter of 6 mm (R6) or 4 mm (R4).

In step (c) the comminuted semi-hard cheese is wetted with a liquid medium comprising water for at least 10 seconds. Such wetting comprises contacting the comminuted semi-hard cheese with the liquid medium. This contacting suitably takes place by immersing the comminuted semi-hard cheese in the liquid medium or spraying the liquid medium onto the comminuted semi-hard cheese. Immersion is preferred. The liquid medium used is water-based. In one embodiment the liquid medium is water, i.e. the liquid medium consists of water only without any added salt(s) or preservation acid(s) dissolved in the water. In a further embodiment the liquid medium is an aqueous solution of at least one preservation acid and/or at least one mineral salt. Suitable preservation acids and salts are those which are soluble in water, conventionally used in cheese and hence suitable for human consumption. Moreover, they should not negatively impact the taste and other sensory properties of the mozzarella cheese. Suitable preservation acids, accordingly, include one or more of citric acid, sorbic acid and lactic acid, whilst suitable mineral salts include one or more of sodium chloride, calcium chloride and potassium chloride. Preservation acids will usually be present in the liquid medium in an amount up to 15 mmol/l, preferably from 0 to 12 mmol/l. The amount of salt(s) present in the liquid medium will typically not exceed 0.9 mol/l and preferably is in the range of 0 to 0.7 mol/l, more preferably 0 to 0.35 mol/l.

As regards the wetting time (i.e. the time during which the comminuted semi-hard cheese is in direct contact with the liquid medium in step (c)), it was found that this wetting time should be sufficiently long to allow the uptake of the liquid medium by the comminuted semi-hard cheese. A wetting time of 10 seconds was found to be the minimum amount of time required. On the other hand, the wetting time should suitably also not be unnecessarily long. Accordingly, it was found that good results are obtained when the wetting time does not exceed 15 minutes, more suitably when it does not exceed 10 minutes. Firstly, no beneficial effects of longer wetting times could be recognized. Secondly, an additional advantage of such limited wetting time is that the process would also be more attractive for industrial application, as shorter wetting times means shorter production times and hence higher production per unit of time. This is desirable from an economic and commercial perspective.

When carrying out step (c), it was found that the liquid medium should have a temperature of at least 0 °C while it should not exceed 20 °C, preferably it should not exceed 15 °C. When contacting the comminuted semi-hard cheese with liquid medium having such low temperature it was found that water of the liquid medium is absorbed by the semi-hard cheese surprisingly well and seems to be stably included in the cheese matrix, also when the liquid medium comprises one or more dissolved mineral salts in the quantities indicated above. As a result, the semi-hard cheese eventually obtained in step (d) has a higher moisture content which is beneficial for its sensory properties as well as for baking applications in which the cheese melts. The temperature of the liquid medium should not exceed 20 °C, as this is likely to cause microbial issues.

Furthermore, it was found that for achieving optimum results the comminuted semi-hard cheese is suitably contacted with an excess of the liquid medium, that is, the liquid medium is present in an amount that is at least 5 times, preferably at least 10 times higher than the amount of comminuted semi-hard cheese that is immersed. It was found that very good results are obtained when the weight ratio of comminuted semi-hard cheese to liquid medium ranges from 1:5 to 1:500, preferably from 1:10 to 1:300, more preferably 1:15 to 1:100.

In step (d) the wetted comminuted semi-hard cheese resulting from step (c) is isolated from the remaining liquid medium to obtain the comminuted semi-hard cheese having an increased moisture content. This can be achieved in ways known in the art, depending on the wetting treatment used in step (c). In general it will comprise separating the liquid medium from the wetted comminuted semi-hard cheese, optionally followed by a superficial drying treatment to remove any remaining liquid medium on the outer surface of the wetted comminuted semi-hard cheese. For example, if the comminuted semi-hard cheese is immersed in the liquid medium in step (c), the liquid medium can be removed by decanting the liquid medium, pumping the remaining liquid medium from the vessel in which the immersion took place or pouring the content of this vessel into a colander-type of vessel from which the remaining liquid can run into a separate vessel for re-use in a new immersion treatment. If the comminuted semi-hard cheese was first placed in a closable sieve which was then closed and placed in a vessel that contains the liquid medium, so that the sieve containing the comminuted semi-hard cheese is immersed, the sieve can be removed from the vessel upon completion of the immersion and the liquid medium can then be allowed to pour from the sieve. Likewise, when spraying the liquid medium onto the comminuted semi-hard cheese, the liquid medium can be allowed to pour from the comminuted semi-hard cheese if the cheese was placed on a sieve. The liquid medium will then be assembled in a container arranged below the sieve that contains the comminuted cheese.

In a preferred embodiment step (d) comprises separating the remaining liquid medium from the wetted comminuted semi-hard cheese, e.g. by any of the methods described above, and dry-blowing the surface of the wetted comminuted semi-hard cheese. By such dry-blowing any liquid medium that is attached to the outer surface of the wetted semi-hard cheese particles can be removed. For example, such dry-blowing suitably takes place by compressed air (e.g. 3-8 bar) for sufficient time to remove any excess liquid medium on the outer surface of the cheese particles. This dry-blowing facilitates further handling of the resulting semi-hard cheese particles having an increased moisture content. Such further handling could suitably comprise (in any order) the steps of

(e) freezing the comminuted semi-hard cheese having an increased moisture content; and
(f) packing the comminuted semi-hard cheese having an increased moisture content.

The packed semi-hard cheese particles having an increased moisture content thus obtained can then be transported to the end-users who can use this cheese product for food applications.

The comminuted semi-hard cheese having an increased moisture content as obtained in step (d) will typically have a moisture content of at least 45% by weight based on total weight of the cheese. The actual moisture content will also depend on the moisture content of the semi-hard cheese prepared in step (a). It was found, however, that in the process of the present invention the moisture content of the semi-hard cheese increases to such extent that the weight of the comminuted semi-hard cheese that is subjected to step (c) has increased with at least 7%, preferably at least 9%, after isolation step (d). In other words, the moisture uptake of the starting comminuted semi-hard cheese, i.e. the comminuted semi-hard cheese as obtained in step (b) that is subjected to wetting step (c), is at least 7% by weight, preferably at least 9% by weight, based on total weight of such starting comminuted semi-hard cheese. The moisture uptake should suitably not exceed 15% by weight (i.e. weight of the comminuted semi-hard cheese that is subjected should not have increased with more than 20% after isolation step (d)), as this could negatively impact taste and the cheese may become too soft.

The process of the present invention is not limited to semi-hard cheeses of a particular age, but can be applied to semi-hard cheeses of different ages (i.e. time the cheese has ripened). This increases the applicability of the process and makes it particularly suitable to improve the valorisation of a wide range of semi-hard cheeses.

The invention is further illustrated by the following examples.

EXAMPLES

Example 1

The outer layer of 1 cm of a foil-ripened Gouda cheese block of 50 cm x 30 cm x 10 cm that had ripened for 2 days (i.e. age of 2 days) was cut from the cheese block and diced separately in cube-shaped blocks of 1x1x1 cm. Approximately 10 grams of cheese cubes were placed in a tea sieve. Weight of the dry tea sieve was 32.27 grams. A mechanical stirrer (110 rpm) was added to a water bath (cryostat bath), so that the water bath could be kept at a constant temperature. The tea sieve containing the cheese cubes was first weighed (weight before) and then immersed in the middle of the water bath for 7 minutes, while stirring and keeping the water bath at a constant temperature. After these 7 minutes of immersion the tea sieve with the cheese cubes was removed from the water bath and the cheese cubes were subsequently blow-dried inside the tea sieve with compressed air (6 bar) for 30 seconds and weighed again (weight after). Cheese cubes were removed and tea sieve was dried.

The Gouda cheese block's outer layer had the properties as indicated in Table 1, results are indicated in Table 2.

Table 1 Gouda cheese properties

| Moisture (wt% on total cheese) | 43.8 |
|---|---|
| Fat (wt% on dry matter) | 48.8 |
| NaCl (wt% on dry matter) | 2.9 |
| pH | 5.25 |

Methods used:    Moisture:    NEN-EN-ISO 5534
    Fat:    NEN-EN-ISO 1735
    NaCl:    NEN-EN-ISO 5943

Example 2

The procedure of Example 1 was repeated with foil-ripened Gouda cheese of age 6 days, 8 days and 23 days. The results are indicated in Table 2.

Table 2 Results

| Age cheese | Temperature (°C) | weight before (g) | weight after (g) | Moisture uptake (%)* | Moisture content cheese after immersion (%w)** |
|---|---|---|---|---|---|
| 2 days | 10 | 42.19 | 43.49 | 13.1 | 50.3 |
| | 20 | 42.65 | 43.53 | 8.5 | 48.2 |
| 6 days | 10 | 42.31 | 43.22 | 9.1 | 48.5 |
| | 20 | 42.20 | 42.94 | 7.5 | 47.7 |
| 8 days | 10 | 42.17 | 43.21 | 10.5 | 49.1 |
| | 20 | 42.26 | 43.14 | 8.8 | 48.3 |
| 23 days | 10 | 41.99 | 43.46 | 15.1 | 51.2 |
| | 20 | 42.41 | 43.66 | 12.3 | 50.0 |

* Moisture uptake is % of weight increase of the comminuted Gouda cheese calculated as

$$\frac{\text{weight after (g)} - \text{weight before (g)}}{\text{weight before (g)} - 32.27 \text{ g}} * 100\%$$

** Moisture content cheese after immersion is % by weight of moisture based on total weight of cheese (after immersion and blow drying) calculated as

$$\frac{0.438 * (\text{weight before (g)} - 32.27 \text{ g}) + \text{weight increase (g)}}{\text{weight after (g)} - 32.27 \text{ g}} * 100\%$$

with

$$\text{weight increase (g)} = \text{weight after (g)} - \text{weight before (g)}$$

The results in Table 2 show that the comminuted outer layer of a foil-ripened Gouda cheese adequately takes up moisture. The increased moisture content not only makes the cheese softer and hence better suited for consumption, it also increases the weight of the end product, so that valorisation of the cheese is improved.

**Claims**

1. Process for increasing the moisture content of a semi-hard cheese comprising the steps of

    (a) providing a semi-hard cheese;
    (b) comminuting the semi-hard cheese;
    (c) wetting the comminuted semi-hard cheese obtained with a liquid medium comprising water for at least 10 seconds; and
    (d) isolating the wetted comminuted semi-hard cheese resulting from step (c) from the remaining liquid medium to obtain the comminuted semi-hard cheese having an increased moisture content,

    wherein the liquid medium has a temperature of at least 0 °C and at most 20 °C, preferably at most 15 °C, and wherein the moisture content of the semi-hard cheese increases to such extent that the weight of the comminuted semi-hard cheese that is subjected to step (c) has increased with at least 7% after isolation step (d).

2. Process according to claim 1 comprising an additional step between steps (a) and (b):

    (a') cutting an outer layer from the semi-hard cheese obtained in step (a), this outer layer having a thickness of at most 5 cm, preferably at most 3 cm, and using this outer layer as the semi-hard cheese to be subjected to comminuting step (b).

3. Process according to claim 1 or 2, wherein step (b) comprises shredding or grating the semi-hard cheese or cutting the semi-hard cheese into particles having a volume below 10 cm$^3$, preferably below 5 cm$^3$.

4. Process according to any one of the preceding claims, wherein step (c) comprises immersing the comminuted semi-hard cheese in a liquid medium comprising water or spraying the comminuted semi-hard cheese with a liquid medium comprising water.

5. Process according to any one of the preceding claims, wherein the liquid medium is selected from water and an aqueous solution of at least one preservation acid and/or at least one mineral salt.

6. Process according to any one of the preceding claims, wherein the wetting time in step (c) does not exceed 15 minutes and preferably does not exceed 10 minutes.

7. Process according to any one of the preceding claims, wherein when weight ratio of comminuted semi-hard cheese to liquid medium in step (c) ranges from 1:5 to 1:500, preferably from 1:10 to 1:300, more preferably 1:15 to 1:100.

8. Process according to any one of the preceding claims, wherein step (d) comprises separating the remaining liquid medium from the wetted comminuted semi-hard cheese and dry-blowing the surface of the wetted comminuted semi-hard cheese.

9. Process according to any one of the preceding claims, wherein the process further comprises the steps (in any order) of

    (e) freezing the comminuted semi-hard cheese having an increased moisture content; and
    (f) packing the comminuted high-moisture semi-hard cheese having an increased moisture content.

Europäisches
Patentamt
European
Patent Office
Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/029713 A1 (MEGMILK SNOW BRAND CO LTD [JP]; UCHIDA TOSHIAKI [JP] ET AL.) 8 March 2012 (2012-03-08) * example 1 * | 1-4,7-9 | INV. A23C19/14 |
| X | FABER T J ET AL: "Describing the firmness, springiness and rubberiness of food gels using fractional calculus. Part II: Measurements on semi-hard cheese", FOOD HYDROCOLLOIDS, ELSEVIER BV, NL, vol. 62, 15 July 2016 (2016-07-15), pages 325-339, XP029709622, ISSN: 0268-005X, DOI: 10.1016/J.FOODHYD.2016.06.038 * page 333 * | 1,3,5,7,9 | |
| X | WO 2008/136085 A1 (SNOW BRAND MILK PRODUCTS CO LTD [JP]; HANAZAWA TOMOHITO [JP] ET AL.) 13 November 2008 (2008-11-13) * paragraph [0026] * | 1-9 | |
| X | JP 2016 158603 A (NISSIN FOODS HOLDINGS CO LTD) 5 September 2016 (2016-09-05) * examples 1-1 - 1-6 * | 1,3-9 | TECHNICAL FIELDS SEARCHED (IPC) A23C |

The present search report has been drawn up for all claims

| Place of search | Date of completion of the search | Examiner |
|---|---|---|
| The Hague | 1 July 2025 | Galleiske, Anke |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

.............................................................

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 25 15 0743

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | Publication date | Patent family member(s) | | Publication date |
|---|---|---|---|---|
| WO 2012029713 A1 | 08-03-2012 | JP | 5695370 B2 | 01-04-2015 |
| | | JP | 2012050375 A | 15-03-2012 |
| | | WO | 2012029713 A1 | 08-03-2012 |
| WO 2008136085 A1 | 13-11-2008 | CN | 101677586 A | 24-03-2010 |
| | | KR | 20100016651 A | 12-02-2010 |
| | | WO | 2008136085 A1 | 13-11-2008 |
| JP 2016158603 A | 05-09-2016 | JP | 6553895 B2 | 31-07-2019 |
| | | JP | 2016158603 A | 05-09-2016 |

EPO FORM P0459

For more details about this annex : see Official Journal of the European Patent Office, No. 12/82